# EUROPEAN PATENT SPECIFICATION

(11) **EP 3 665 019 B1**
(45) Date of publication and mention of the grant of the patent: **04.10.2023**
(21) Application number: 18755266.6
(22) Date of filing: 01.08.2018
(51) Int. Cl.: B60B 33/00

(54) **CASTOR WHEEL COVER**
LENKROLLENABDECKUNG
CHAPE DE ROULETTE PIVOTANTE

(30) Priority: 09.08.2017 GB 201712782
(43) Date of publication of application: 17.06.2020
(73) Proprietor: Davis, Nicholas, Winchester, Hampshire SO23 8SJ (GB)
(72) Inventor: Davis, Nicholas, Winchester, Hampshire SO23 8SJ (GB)
(74) Representative: Murgitroyd & Company
(86) International application number: PCT/GB2018/052206
(87) International publication number: WO 2019/030503

(56) References cited:
- DE-A1- 2 311 617
- GB-A- 810 871
- GB-A- 1 093 535
- KR-A- 20140 065 316
- US-A- 5 123 143

## Description

### Field of the Invention

The present invention relates to a castor wheel cover, and more particularly to a castor wheel cover comprising a resiliently deformable material formable to provide a housing with a first aperture.

### Background to the Invention

Many workspaces and premises must abide by strict hygiene regulations to prevent the buildup of microbes and other, harmful particulate matter. For example, food preparation premises in the UK must abide by The Food Hygiene (England) Regulations 2006 (as amended) or equivalent Regulations in Scotland, Wales and Northern Ireland. Elsewhere, food preparation areas must abide by one or more alternative regulations such as Regulation (EC) No 852/2004 of the European Parliament and of the Council of 29 April 2004 on the hygiene of foodstuffs, ISO 22000 - Food Safety Management, ISO 9000 - Quality management systems, or ISO 9001 - Quality management systems. Other regulations govern the hygiene of alternative spaces such as surgical theatres, care homes, hospital wards, childcare premises amongst other environments.

To ensure these often-rigorous standards are met, the layout, design and construction of the premises must allow adequate maintenance, cleaning and disinfection. Therefore, when designing any hygiene controlled space, all aspects of the premises must prevent the buildup of dirt, the shedding of particulate matter from surfaces, the growth of mould and the excessive formation of condensation.

To ensure the premises as a whole remain hygienic, it is essential that all items of furniture present in the premises do not hinder this quest for hygiene. As such, it is commonplace for furniture located in these hygienic spaces to be mounted on castor wheels, to allow these pieces of furniture to be moved for efficient cleaning of the premises as a whole.

However, whilst the movement of furniture allows any premises to be cleaned more effectively, the inclusion of castor wheels on the base of any furniture creates additional areas where dirt and other undesirable particulate matter may become lodged. As such, cleaning these wheels represents a significant issue when attempting to maintain the cleanliness of these improved hygiene premises as a whole.

US 5 123 143 discloses a castor wheel cover comprising a resiliently deformable material formable to provide a housing with a first aperture.

GB 810871 discloses cupboard or like door fastenings of the kind commonly termed ball catches.

GB 1093535 discloses a furniture castor and is more particularly concerned with forms of ball castors which reduce the wear on floors or floor coverings and which have a double action whereby they are free-rolling in an unloaded or only lightly loaded state and are braked to prevent further movement when a sufficient load is applied to the article to which they are fitted.

DE 2311617 discloses a furniture foot with mounting for a running body that can roll on the floor.

KR 2014/0065316 discloses a caster capable of detachably attaching a brush for cleaning foreign substances attached to a wheel.

### Summary of the Invention

According to a first aspect of the present claimed invention, there is provided a castor wheel cover comprising a resiliently deformable material, wherein the material is formable to provide a housing with a first aperture, the housing for accommodating a castor wheel which rotates around a single axis as it protrudes through the first aperture, wherein said castor wheel cover comprises a first engagement portion and a second engagement portion, wherein said first engagement portion engages with said second engagement portion to form said housing.

In this way, an apparatus for protecting castor wheels from becoming contaminated with particulate matter or microbes is provided, such that the cleaning of improved hygiene locations where these castor wheels are located may be undertaken more easily.

Preferably the material is formable to provide a housing with a first aperture, the housing for accommodating a castor wheel which rotates around two independent axes as it protrudes through the first aperture. More preferably, these two independent axes are perpendicular to one another. Most preferably, the one of these independent axes is parallel to the floor, and the other is perpendicular to the floor.

Preferably, the housing comprises a looped structure. More preferably, the looped structure is a ring. More preferably, the looped structure is continuous. More preferably, the looped structure is uninterrupted. More preferably, the looped structure is broken and then reformed during use of the cover.

Preferably, the castor wheel cover comprises a second aperture. More preferably, the second aperture is smaller than the first aperture. More preferably, the second aperture is substantially opposite the first aperture. More preferably, the second aperture is circular. More preferably, the second aperture can be enlarged by the user during use. More preferably, the second aperture is located in an upper surface of the cover.

Preferably, the castor wheel cover decreases in thickness around the second aperture. More preferably, this decrease in thickness occurs at a constant rate. Alternatively, this decrease in thickness is the result of a step change in the thickness of the castor wheel cover. Still more preferably, the decrease in thickness is achieved with a combination of a step change and a constant rate decrease. Preferably, the castor wheel cover comprises a planar pad portion which, in use, is located over a brake located on a castor wheel.

The castor wheel cover comprises a first engagement portion and a second engagement portion, where the first engagement portion engages with the second engagement portion to form the housing. Preferably, the first engagement portion and the second engagement portion engage in face to face contact.

Preferably, the material that forms the first engagement portion is thinner than the majority of the material which forms the remainder of the cover. Preferably, the material that forms the first engagement portion and the material that forms the second engagement portion is thinner than the material which forms the majority of the remainder of the cover. Preferably, the first engagement portion is connected to the second engagement portion with adhesive. More preferably, the adhesive is reusable. Preferably, the first engagement portion is connected to the second engagement portion via a textured surface located on one or both of the first engagement portion and/or the second engagement portion.

Preferably, the castor wheel cover comprises an outwardly extending lip at a bottom edge. More preferably, the lip extends around the perimeter of the cover. More preferably, the lip extends around the majority of the perimeter of the cover. Most preferably, the lip extends around the entire perimeter of the cover.

Preferably, the castor wheel cover is waterproof. Preferably, the castor wheel cover has antimicrobial properties. Preferably, the castor wheel cover is washable in a dishwasher. Preferably, the cover comprises a polymeric material. More preferably, the cover comprises silicone rubber. Preferably, the castor wheel cover comprises a textured surface.

More preferably, the cover is formed of a single piece of silicone rubber, such that said cover is flexible and resiliently deformable.

Preferably, the cover comprises at least one thermoplastic elastomer or thermoplastic rubber. More preferably, said cover is formed of a single piece of thermoplastic elastomer or thermoplastic rubber, such that said cover is flexible and resiliently deformable. More preferably still, thermoplastic elastomer or thermoplastic rubber is selected from at least one material of the group styrenic block copolymers, thermoplastic polyolefinelastomers, thermoplastic vulcanizates, thermoplastic polyurethanes, thermoplastic copolyester, thermoplastic polyamides, polyolefin blends or any combination thereof.

Preferably, the cover is formed of a single piece of rubber or elastomer, such that said cover is flexible and resiliently deformable. More preferably, the cover is a single piece of rubber or elastomer, such that the cover is flexible and resiliently deformable. More preferably, the rubber or elastomer is selected from at least one material of the group silicone rubber, stryrenic block copolymer, melt processable rubber, thermoplastic olefinic elastomer, thermoplastic olefin, thermoplastic polyester elastomer, thermoplastic vulcanizate, thermoplastic amide elastomer, thermo polyurethane, natural rubber, polyisoprene, polybutadiene, polychloroprene, butyl rubber, styrene-butadiene rubber, nitrile rubber, ethylene propylene rubber, epichlorohydrin rubber, polyacrylic rubber, silicone rubber, fluorosilicone rubber, fluoroelastomers, perfluoroelastomers, polyether block amides, chlorosulfonated polyethylene, ethylene-vinyl acetate, polysulfide rubber, elastoolefin or any combination thereof.

Preferably, the castor wheel cover is formed in an injection moulding process. Preferably, the castor wheel cover is disposable.

Preferably, the cover comprises a cleaning member. Preferably, the cleaning member is arranged to be complementary the castor wheel to be accommodated. More preferably, in use, the cleaning member is arranged to abut a castor wheel accommodated within the castor wheel cover.

Preferably, the cleaning member partially occludes the first aperture. More preferably, the partially occlusion of the first aperture by the cleaning member is complementary to the castor wheel to be accommodated.

Preferably, the cleaning member is integrally formed with the remainder of the cover. More preferably, the cleaning member is formed from the same material as the cover. More preferably still, the cleaning member and the cover are formed from the same piece of material.

Preferably, in use, said cleaning member is arranged to scrape at least one surface of a castor wheel accommodated within said castor wheel cover when said castor wheel rotates.

Also described is a castor wheel cover comprising a resiliently deformable housing for accommodating a castor wheel, wherein said housing comprises a top section and at least one side wall which extends downwardly from said top section, wherein said housing comprises first and second apertures, said second aperture located in said top section of said housing and sized to fit a connecting member of a castor wheel, and said first aperture defined by the lower edge of said at least one side wall, wherein said first aperture is sized to allow the protrusion of a portion of a caster wheel when it is accommodated within said housing.

### Detailed Description

Embodiments of the present invention will now be described by way of example only and with reference to the accompanying drawings, in which:
Figures 1a to 1d present schematic views of a castor wheel cover according to a first embodiment of the present claimed invention;
Figures 2a to 2d present schematic views of a castor wheel cover according to a second embodiment of the present claimed invention;
Figures 3a to 3d present schematic views of a castor wheel cover according to a third embodiment of the present claimed invention; and

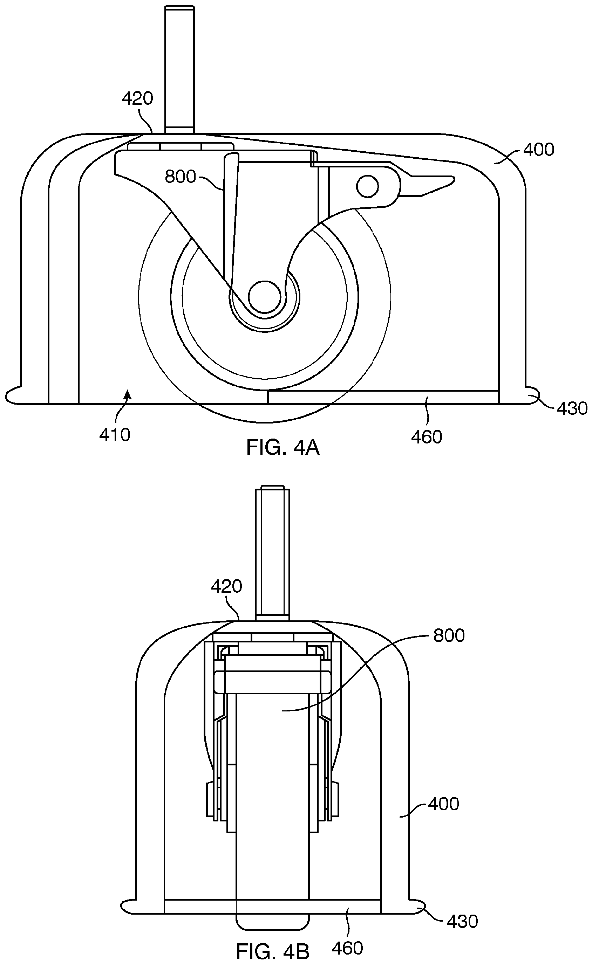

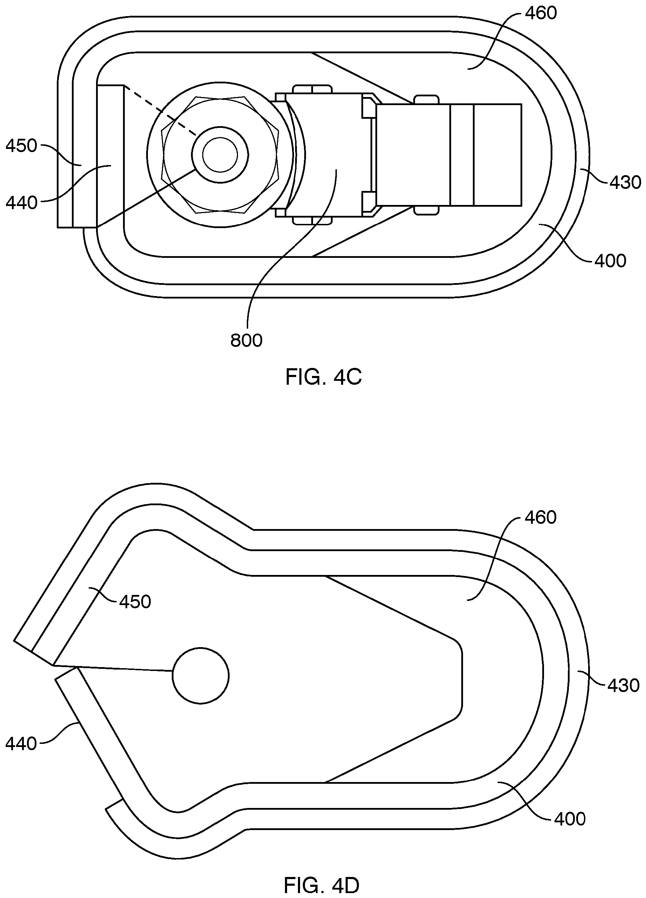

Figures 4a to 4d present schematic views of a castor wheel cover according to a fourth embodiment of the present claimed invention.

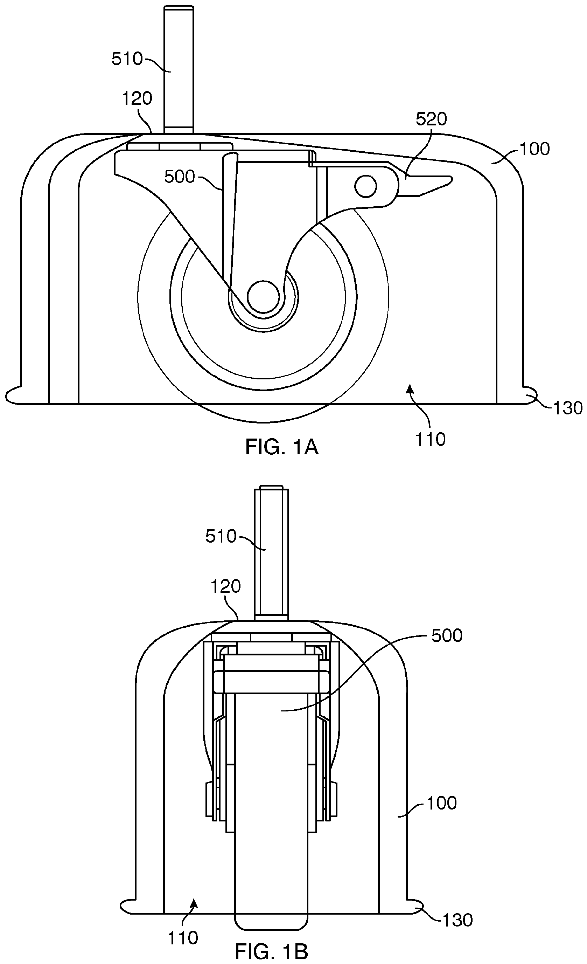

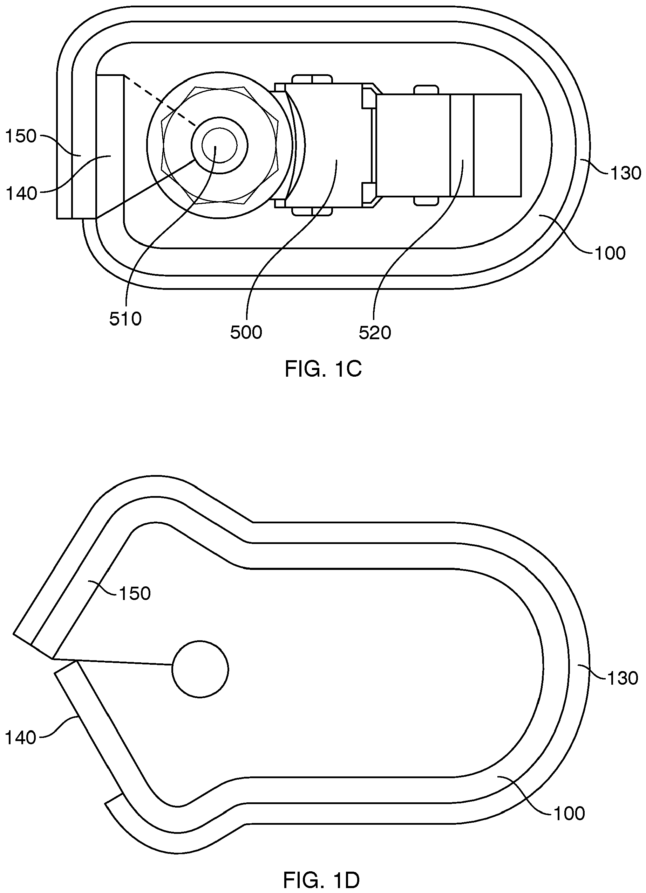

Referring to Figure 1a to 1d of the drawings, there is shown a castor wheel cover 100 in accordance with the present claimed invention. As can be seen in Figures 1a to 1c, the castor wheel cover 100 is sized and shaped to form a vessel, housing or chamber which substantially contains or surrounds a castor wheel 500. The castor wheel cover 100 comprises both a head portion which extends over the top of the castor wheel 500, and a skirt portion which extends downwardly from the head portion, the skirt portion extending from the head portion to a point close to or abutting the floor.

As described, the castor wheel 500 may be either a swivel castor, where the wheel may rotate around a second vertical axis as well as roll around a horizontal axis, or a rigid castor where the wheel may only roll around a horizontal axis. It is envisaged the present claimed invention may be utilised with all kinds of castors, including kingpin castors, kingpin-less castors, hollow kingpin castors, plate castors, stem castors and fixed castors. Additionally, use of the present claimed invention with castor wheels 500 in at least the standard sizes of 75 mm, 100 mm, 125 mm, 150 mm and 200 mm is envisaged, whether these castor wheels 500 are either single wheel castors or double wheeled castors. Use of the present claimed invention with castor wheels 500 with or without brakes is also desirable.

The castor wheel cover 100 includes a first aperture 110 through which the base of the castor wheel 500 protrudes. As such, whilst the castor wheel cover 100 forms a shroud over the castor wheel 500, the protrusion of the castor wheel 500 through the first aperture in the base of the castor wheel cover 100 ensures that the castor wheel 500 is unhindered in its contact with the floor or other surface on which it rests. Therefore, the rotation of the castor wheel 500, and the movement of the object to which the castor wheel 500 is attached, remains unhindered by the present of the castor wheel cover 100.

The castor wheel cover 100 also includes a second aperture 120. This second aperture is located at or near the top of the castor wheel cover 100. The second aperture is substantially opposite the first aperture 110 and, additionally, is substantially circular in shape. The second aperture 120 is sized to fit or surround the affixation member 510 which attaches the castor wheel 500 to a piece of furniture, ensuring a tight seal is formed between the castor wheel cover 100 and the affixation member 510 to prevent any particulate matter or microbes from passing through the second aperture 120 to become attached to the castor wheel 500.

The castor wheel cover 100 is thinned or tapers in thickness in the region around the second aperture 120, thus ensuring the castor wheel cover 100 does not interfere with the operation of the castor wheel 500. Here, the taper in the thickness of the castor wheel cover 100 is continuous without any defined step change, although a step change in thickness around the second aperture 120 is also envisaged. The size of the second aperture 120 may be customised by the user by cutting the cover 100 to enlarge the aperture 120.

The castor wheel cover further comprises a lip 130. The lip extends around the base of the castor wheel cover 100, extending outwardly from the castor wheel cover 100 away from the castor wheel. The lip 130 extends around the perimeter of the castor wheel cover 100, such that when the castor wheel cover 100 is in position the lip 130 extends around its entire perimeter. As the lip 130 increases the thickness of the castor wheel cover 100 in a local area, it may assist in maintaining the shape of the cover 100 by increasing its stiffness and strength in the area where the lip 130 is presented.

A first engagement portion 140 is also found as part of the castor wheel cover 100. A second engagement portion 150 is also present. The first 140 and second 150 engagement portions are located upon the castor wheel cover such that they substantially oppose one another when the castor wheel cover 100 surrounds a castor wheel 500. As such, the first 140 and second 150 engagement portions may engage one another to complete the loop or ring structure of the castor wheel cover 100, providing protection which extends 360 degrees around the castor wheel 500.

Here, the first engagement portion 140 is the only area of the castor wheel cover to which the lip 130 does not extend. The lip 130 does not extend to the first engagement portion 140 in this embodiment of the invention to ensure the first engagement portion 140 and the second engagement portion 150 can engage in face to face contact. In other embodiments of the invention, either the first engagement portion 140, the second engagement portion 150 or both may be thinned to ensure these portions may engage without creating a step or disruption in the outer circumference of the castor wheel cover 100.

The first engagement portion 140 may be connected or affixed to the second engagement portion 150 with the use of an adhesive. Alternatively, the use of a textured surface on one or both of the contacting faces of the first engagement portion 140 and the second engagement portion 150 may be utilised to hold the first 140 and second engagement portions 150 in position relative to one another. Any method of holding the first 140 and second 150 engagement portions in position relative to one another will prevent the ingress of particulate matter and microbes into the volume defined by the castor wheel cover 100. The use of first 140 and second 150 connecting portion results in the castor wheel cover 100 closing with a clamshell mechanism, wrapping around or enveloping the castor wheel 500.

The castor wheel cover 100 is formed of a single piece of silicone rubber, such that the cover is flexible and resiliently deformable. As such, the castor wheel cover 100 may be bent and elastically deformed a large number of times without any permanent deformation in its overall shape. Additionally, the ability of the castor wheel cover 100 to deform ensures the braking mechanism 520 of the castor wheel 500 may still be operated when the castor wheel cover 100 is in use.

As the castor wheel cover 100 is flexible, a user may depress the cover 100 in the area above the braking mechanism 520 to activate the braking mechanism through the cover 100. This may be assisted by the use of a textured or roughened surface on the castor wheel cover 100 positioned above the braking mechanism 520. The braking mechanism 520 may be released similarly, through the castor wheel cover 100 when it is in use.

The castor wheel cover may be produced in numerous colours, with each colour potentially providing an indication as to the properties of the castor wheel cover 100 and the field in which it is suitable for use. Additionally, the castor wheel cover 100 may be suitable for washing in a dishwasher, allowing the castor wheel cover to be cleaned cost effectively and thoroughly before re-use. The castor wheel cover 100 may be produced in an injection moulding process. Additionally, further information or branding may be incorporated into the surface of the castor wheel cover 100 during any manufacturing process.

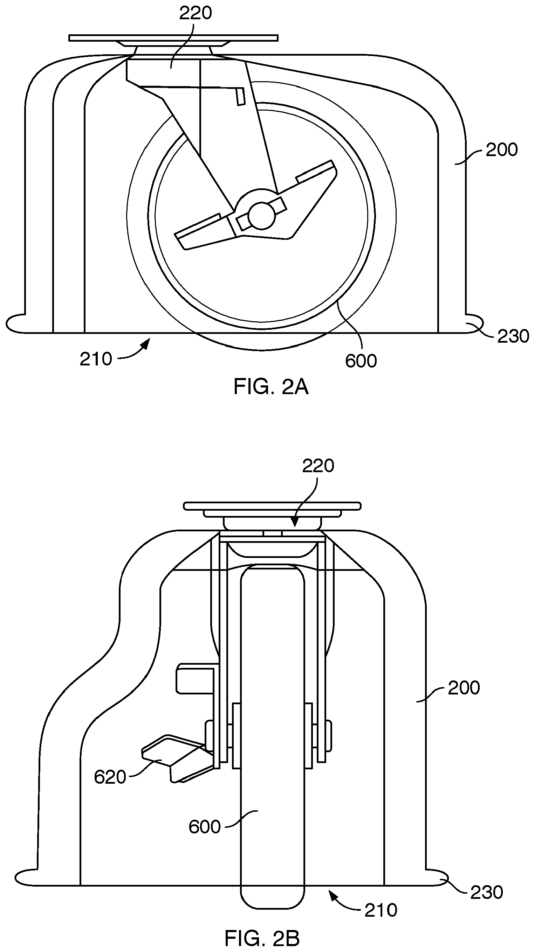

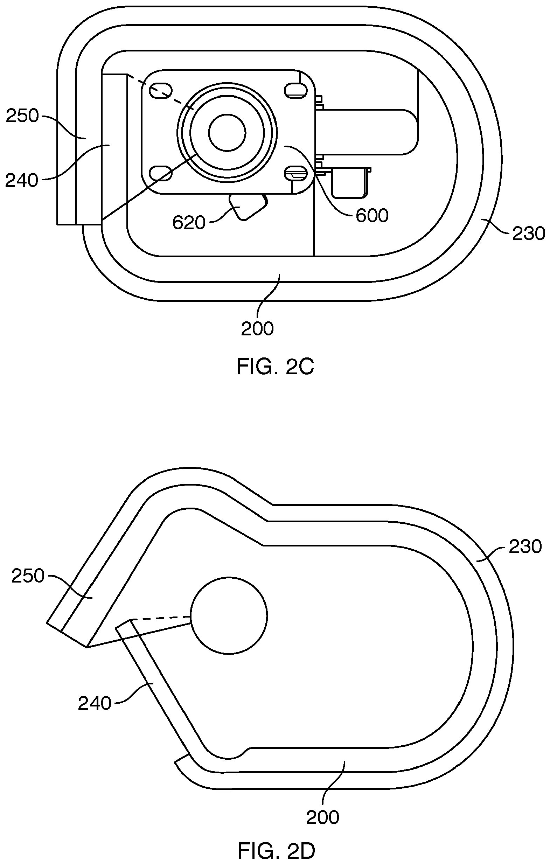

Referring now to Figures 2a to 2d, a second embodiment of the castor wheel cover 200 is depicted. This second embodiment of the invention comprises a first aperture 210, second aperture 220, lip 230, first engagement portion 240 and second engagement portion 250 broadly equivalent to those of the first embodiment, but is sized to accommodate a second variation of a castor wheel 600. Additionally, this second castor wheel cover 200 is adapted to allow the user to access a braking system 620 located on the side of the castor wheel 600.

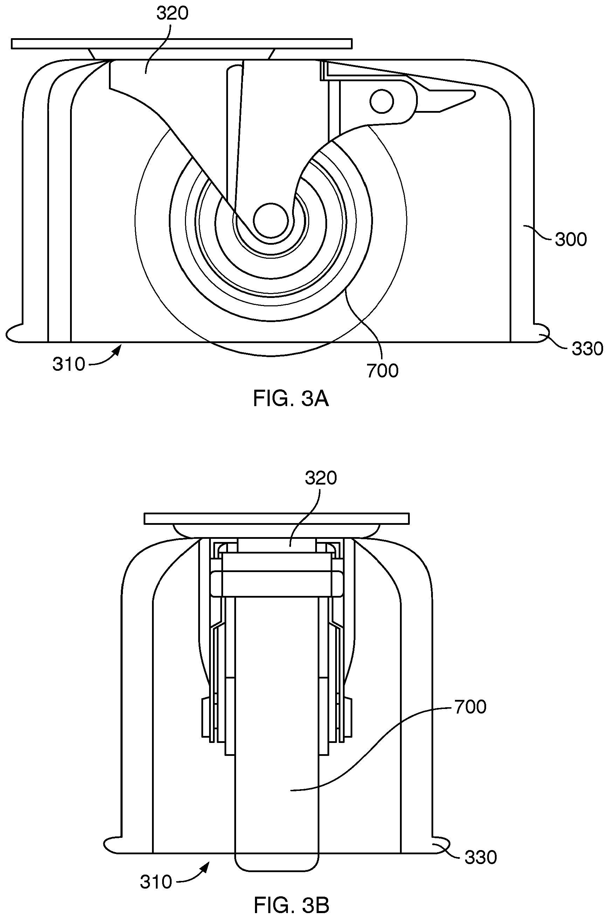

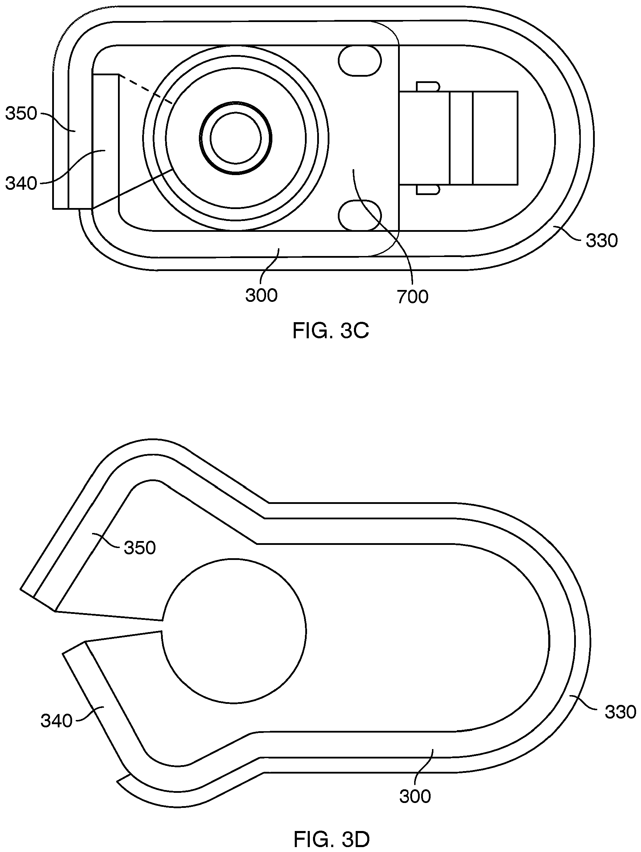

In relation to Figures 3a to 3d, a third embodiment of the castor wheel cover 300 is depicted. This third embodiment of the invention comprises a first aperture 310, second aperture 320, lip 330, first engagement portion 340 and second engagement portion 350, broadly equivalent to those of the first embodiment, but is sized to accommodate a third variation of a castor wheel 700.

Each of the three embodiments of the castor wheel cover 100, 200, 300 described, focus on castor wheel covers that fit tightly around swivel castor wheels 500, 600, 700. Where the castor wheel covers 100, 200, 300 fit the castor wheels 500, 600, 700, as illustrated in Figures 1a to 3d, the castor wheel covers 100, 200 300 are designed to swivel or rotate around an axis perpendicular to the surface on which the castor rests in unison with the castor wheels 500, 600, 700 they cover. As such, the castor wheels 500, 600, 700 can both rotate around an axis perpendicular to the surface on which the castor rests and roll in unison with the castor wheel cover 100, 200, 300.

Alternatively, castor wheel covers which define a larger volume or space around a swivel castor wheel are also envisaged. Using a castor wheel cover to provide this enlarged space within which a swivel castor may rotate around two independent axes is an alternative method of allowing the swivel castor wheels to both rotate around an axis perpendicular to the surface on which the castor rests and roll without hindering the overall movement of the castor itself, or operation of the castor brake mechanism.

Referring to 4a to 4d, a fourth embodiment of the castor wheel cover 400 is depicted. This fourth embodiment comprises a first aperture 410, second aperture 420, lip 430, first engagement portion 440 and second engagement portion 450 broadly equivalent to those of the first embodiment, but further comprises a cleaning member 460.

The cleaning member 460 is located at and protrudes from the base of the castor wheel cover 400. The cleaning member 460 protrudes inwardly from the surface of the castor wheel cover 460 opposing the lip 430. As such, the cleaning member 460 partially occludes and protrudes into the first aperture 410 towards where, in use, a castor wheel 800 would be accommodated. The cleaning member 460, therefore, partially occludes the first aperture 410. The partially occlusion of the first aperture 410 by the cleaning member 460 is complementary to the protrusion of the castor wheel 800 through the first aperture 410, such that the cleaning member 460 does not inhibit the protrusion of the castor wheel 800 through the first aperture 410. The cleaning member 460 is formed from the same single piece of material as the castor wheel cover 400. As such, the cleaning member 460 is flexible and resiliently deformable.

The cleaning member 460 is arranged to abut and touch the castor wheel 800 accommodated within the castor wheel cover 400. The cleaning member 460 predominantly abuts the curved surface of the castor wheel 800, such that, in use, the cleaning member 460 abuts the surface of the castor wheel 800 that abuts the ground when the castor wheel 800 is rotated about its axle. As such, during use, the abuttal of the cleaning member 460 on the castor wheel 800 cleans the surface of the castor wheel 800 frictionally by abutting and scraping the surface. This scraping action of the cleaning member 460 acts to remove debris and liquids that may have been acquired by the castor wheel 800 as it traverses the floor or other surface on which it is located. The abuttal of the cleaning member 460 on the castor wheel is arranged such that the impedance of the rotational freedom of the castor wheel 800 about its axle is minimal. The abuttal of the castor wheel 800 and the cleaning member 460 typically causes the cleaning member 460 to be resiliently deformed, where the resilience and opposition to the deformation helps ensures abuttal and engagement between the castor wheel 800 and cleaning member 460.

The cleaning member 460 extends from approximately half of the inward-facing surface of the castor wheel cover 400. The cleaning member 460 is located approximately equidistant from the first engagement portion 440 and the second engagement portion 450.

When taken from an end of the castor wheel cover 400, the distance the cleaning member 460 protrudes into the first aperture 410 towards the castor wheel 800 is at a minimum where, in use, the cleaning member abuts the ground-abutting surface of the castor wheel 800. Either side of this minimum protrusion distance the cleaning member tapers towards the main body of the castor wheel cover 400. As such, the cleaning member 460 is generally V-shaped or U-shaped. The taper of the cleaning member 800 is arranged to enable the castor wheel 800 to swivel about an axis perpendicular to the ground. The tapered sections of the cleaning member 460 can engage the sides of the castor wheel 800 or its curved surface depending on the angled the castor wheel is swivelled at on its axis perpendicular to the floor. As such, the cleaning member can scrape the surface of the castor wheel 800 when the castor wheel is rotated.

Additional embodiments of the invention are envisaged where the second and third embodiments comprise a cleaning member similar to that described in the fourth embodiment.

Further, embodiments of the castor wheel cover 100, 200, 300 and 400 are envisaged where they are made from rubbers, elastomers, thermoplastic elastomers (TPE) or thermoplastic rubbers (TPR). The castor wheel covers of these embodiments are still formed of a single piece of material, such that the cover is flexible and resiliently deformable. As such, the castor wheel cover of these envisaged embodiments may also be bent and elastically deformed a large number of times without any permanent deformation in its overall shape. The material used to form the castor wheel cover can be any one or combination of materials classed as rubbers, elastomers, thermoplastic elastomers or thermoplastic rubbers. Thermoplastic elastomers or thermoplastic rubbers may be preferred as they enable the castor wheel cover to be manufactured easily by injection moulding.

## Claims

1. A castor wheel cover (100) comprising a resiliently deformable material, wherein said material is formable to provide a housing with a first aperture (110), said housing suitable for accommodating a castor wheel (500) which rotates around a single axis as it protrudes through the first aperture (110), **characterised in that** said castor wheel cover (100) comprises a first engagement portion (140) and a second engagement portion (150), wherein said first engagement portion (140) engages with said second engagement portion (150) to form said housing.

2. The castor wheel cover of claim 1, wherein said material is formable to provide a housing with a first aperture (110), said housing for accommodating a castor wheel (500) which rotates around two independent axes as it protrudes through the first aperture (110).

3. The castor wheel cover of claim 1 or claim 2, wherein said housing comprises a looped structure.

4. The castor wheel cover of any preceding claim, wherein said housing comprises a second aperture (120).

5. The castor wheel cover of claim 4, wherein said second aperture (120) is opposite said first aperture (110).

6. The castor wheel cover of claim 4 or claim 5, wherein said second aperture (120) is circular.

7. The castor wheel cover of claim 1, wherein said material that forms said first engagement portion (140) is thinner than the majority of said material which forms the remainder of said cover (100).

8. The castor wheel cover of claim 1, wherein said material that forms said first engagement portion (140) and said material that forms said second engagement portion (150) is thinner than said material which forms the majority of the remainder of said cover (100).

9. The castor wheel cover of claim 1, 7 or 8, wherein said first engagement portion (140) is connected to said second engagement portion (150) with an adhesive, or textured surface.

10. The castor wheel cover of any preceding claim, wherein said cover comprises an outwardly extending lip (130) at a bottom edge.

11. The castor wheel cover of claim 10, wherein said lip (130) extends around the perimeter of said cover.

## Patentansprüche

1. Eine Lenkrollenabdeckung (100), die ein elastisch verformbares Material beinhaltet, wobei das Material formbar ist, um ein Gehäuse mit einer ersten Öffnung (110) bereitzustellen, wobei das Gehäuse zum Aufnehmen einer Lenkrolle (500) geeignet ist, die sich um eine einzige Achse dreht, während sie die erste Öffnung (110) durchragt, **dadurch gekennzeichnet, dass** die Lenkrollenabdeckung (100) einen ersten Eingriffsabschnitt (140) und einen zweiten Eingriffsabschnitt (150) beinhaltet, wobei der erste Eingriffsabschnitt (140) mit dem zweiten Eingriffsabschnitt (150) in Eingriff kommt, um das Gehäuse zu formen.

2. Lenkrollenabdeckung gemäß Anspruch 1, wobei das Material formbar ist, um ein Gehäuse mit einer ersten Öffnung (110) bereitzustellen, wobei das Gehäuse zum Aufnehmen einer Lenkrolle (500) bestimmt ist, die sich um zwei unabhängige Achsen dreht, während sie die erste Öffnung (110) durchragt.

3. Lenkrollenabdeckung gemäß Anspruch 1 oder Anspruch 2, wobei das Gehäuse eine schleifenartige Struktur beinhaltet.

4. Lenkrollenabdeckung gemäß einem der vorhergehenden Ansprüche, wobei das Gehäuse eine zweite Öffnung (120) beinhaltet.

5. Lenkrollenabdeckung gemäß Anspruch 4, wobei sich die zweite Öffnung (120) gegenüber der ersten Öffnung (110) befindet.

6. Lenkrollenabdeckung gemäß Anspruch 4 oder Anspruch 5, wobei die zweite Öffnung (120) kreisförmig ist.

7. Lenkrollenabdeckung gemäß Anspruch 1, wobei das Material, das den ersten Eingriffsabschnitt (140) formt, dünner als der Großteil des Materials ist, das den Rest der Abdeckung (100) formt.

8. Lenkrollenabdeckung gemäß Anspruch 1, wobei das Material, das den ersten Eingriffsabschnitt (140) formt, und das Material, das den zweiten Eingriffsabschnitt (150) formt, dünner als das Material ist, das den Großteil des Rests der Abdeckung (100) formt.

9. Lenkrollenabdeckung gemäß Anspruch 1, 7 oder 8, wobei der erste Eingriffsabschnitt (140) mit dem zweiten Eingriffsabschnitt (150) mittels eines Klebstoffs oder einer strukturierten Oberfläche verbunden ist.

10. Lenkrollenabdeckung gemäß einem der vorhergehenden Ansprüche, wobei die Abdeckung eine sich nach außen erstreckende Lippe (130) an einer unteren Kante beinhaltet.

11. Lenkrollenabdeckung gemäß Anspruch 10, wobei sich die Lippe (130) um den Umfang der Abdeckung erstreckt.

## Revendications

1. Un capot de roue pivotante (100) comprenant un matériau élastiquement déformable, ledit matériau pouvant être mis en forme afin de réaliser un logement présentant une première ouverture (110), ledit logement convenant pour accueillir une roue pivotante (500) qui tourne autour d'un axe unique alors qu'elle dépasse par la première ouverture (110), **caractérisé en ce que** ledit capot de roue pivotante (100) comprend une première portion d'accouplement (140) et une deuxième portion d'accouplement (150), ladite première portion d'accouplement (140) s'accouplant avec ladite deuxième portion d'accouplement (150) afin de former ledit logement.

2. Le capot de roue pivotante de la revendication 1, dans lequel ledit matériau peut être mis en forme afin de réaliser un logement présentant une première ouverture (110), ledit logement étant destiné à accueillir une roue pivotante (500) qui tourne autour de deux axes indépendants alors qu'elle dépasse par la première ouverture (110).

3. Le capot de roue pivotante de la revendication 1 ou de la revendication 2, dans lequel ledit logement comprend une structure en boucle.

4. Le capot de roue pivotante de n'importe quelle revendication précédente, dans lequel ledit logement comprend une deuxième ouverture (120).

5. Le capot de roue pivotante de la revendication 4, dans lequel ladite deuxième ouverture (120) est à l'opposé de ladite première ouverture (110).

6. Le capot de roue pivotante de la revendication 4 ou de la revendication 5, dans lequel ladite deuxième ouverture (120) est circulaire.

7. Le capot de roue pivotante de la revendication 1, dans lequel ledit matériau dont est formée ladite première portion d'accouplement (140) est plus mince que la majeure partie dudit matériau dont est formé le reste dudit capot (100).

8. Le capot de roue pivotante de la revendication 1, dans lequel ledit matériau dont est formée ladite première portion d'accouplement (140) et ledit matériau dont est formée ladite deuxième portion d'accouplement (150) est plus mince que ledit matériau dont est formé la majeure partie du reste dudit capot (100).

9. Le capot de roue pivotante de la revendication 1, de la revendication 7 ou de la revendication 8, dans lequel ladite première portion d'accouplement (140) est raccordée à ladite deuxième portion d'accouplement (150) à l'aide d'un adhésif, ou d'une surface texturée.

10. Le capot de roue pivotante de n'importe quelle revendication précédente, dans lequel ledit capot comprend un rebord (130) qui s'étend vers l'extérieur au niveau d'un bord inférieur.

11. Le capot de roue pivotante de la revendication 10, dans lequel ledit rebord (130) s'étend autour du périmètre dudit capot.
